# EUROPEAN PATENT APPLICATION

(11) **EP 4 827 095 A1**
(43) Date of publication of application: **21.10.2026**
(21) Application number: 26172359.7
(22) Date of filing: 14.04.2026
(51) Int. Cl.: H04N 21/262, H04N 21/647, H04N 21/845, H04N 21/2343

(54) **ORIGIN SERVER SELECTION BASED ON CONTRIBUTION PATH LATENCY DIFFERENTIAL**

(30) Priority: 14.04.2025 US 202519178758
(71) Applicant: Comcast Cable Communications LLC, Philadelphia, Pennsylvania 19103 (US)
(72) Inventor: GILADI, Alexander, Philadelphia, 19103 (US); BENTON, Johnathon, Philadelphia, 19103 (US)
(74) Representative: V.O.

(57) **Abstract**

Methods and systems for linear content delivery are disclosed. In some examples, a user device may receive a manifest associated with content. The manifest may contain a latency value for each of a plurality of origin servers. The latency value for each origin server may be associated with the relative availability of one or more segments of the content at that particular origin server. In some instances, the latency value is indicated with an availability time offset attribute associated with relative latency. The user device may determine a lowest-latency origin server based on the latency values of the plurality of origin servers. The lowest-latency origin server may provide the earliest availability of the one or more segments of content. The user device may send to the determined earlier origin server a request for one or more segments of content.

## Description

### BACKGROUND

A content delivery system may provide content to viewers. The content may comprise various types of content, such as video, audio, and text. In the case of live content, such as a sporting event, newscast, or tv episode release, delays or latency associated with the delivery of the live content to viewers may result in a poor user experience. Delays or latency associated with the delivery of live content may be exacerbated when a content delivery system is configured for redundancy, for example, through the use of redundant system components, redundant communication channels, and the like. Accordingly, systems, devices, and methods are needed for reducing latency in the delivery of content to users.

### SUMMARY

Methods and systems for content delivery are disclosed. In some examples, a user device may receive a manifest associated with content. The manifest may contain one or more latency values for each of a plurality of origin servers. The one or more latency values for each origin server may be associated with one or more segments of the content at that particular origin server. In some instances, the one or more latency values may be indicated by an availability time offset attribute associated with a relative latency among the plurality of origin servers. The user device may determine a lowest-latency origin server based on the one or more latency values of the plurality of origin servers. The lowest-latency origin server may provide the earliest availability of the one or more segments of content. The user device may send to the determined lowest-latency origin server a request for the one or more segments of content. Additionally, a content steering server may act as an intermediary between the user device and the plurality of origin servers and may assist in the determination of the lowest-latency origin server.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

The accompanying drawings, which are incorporated in and constitute a part of this specification, illustrate embodiments and together with the description, serve to explain the principles of the methods and systems.
Figure 1 shows an example system.
Figure 2 shows an example system.
Figure 3 shows an example method.
Figure 4 shows an example method.
Figure 5 shows an example method.
Figure 6 shows an example method.
Figure 7 shows an example computing device.

### DETAILED DESCRIPTION OF ILLUSTRATIVE EMBODIMENTS

Methods, devices, and systems for content delivery are described. The content may comprise linear content. The content may be delivered in a content delivery system configured for redundancy using, for example, redundant components. For example, a content delivery system may provide seamless selection (e.g., by a user or client device, a content steering server, an origin server, or the like) of, and failover among, multiple components (e.g., encoders, packagers, origin servers, content delivery network servers, and the like) for use in the delivery of content to users. The selection of components may consider the relative delay between content segment availability times at the different components. The methods, devices, and systems disclosed herein may determine the "earliest" or lowest-latency components (e.g., the lowest latency origin server, the lowest latency distribution encoder, the lowest latency contribution encoder, etc.), which may reduce delays associated with the delivery of content to user devices. Determining and selecting the lowest-latency components at each step of the content delivery system may yield the lowest-latency delivery of content to one or more user devices. Additionally, the methods, devices, and systems disclosed herein may provide cost reductions (e.g., through power savings, reduced computational demand, decreased complexity, etc.) for "latest" or highest-latency components (e.g., encoders, packagers, and origin servers) while maintaining the same or similar level of system redundancy.

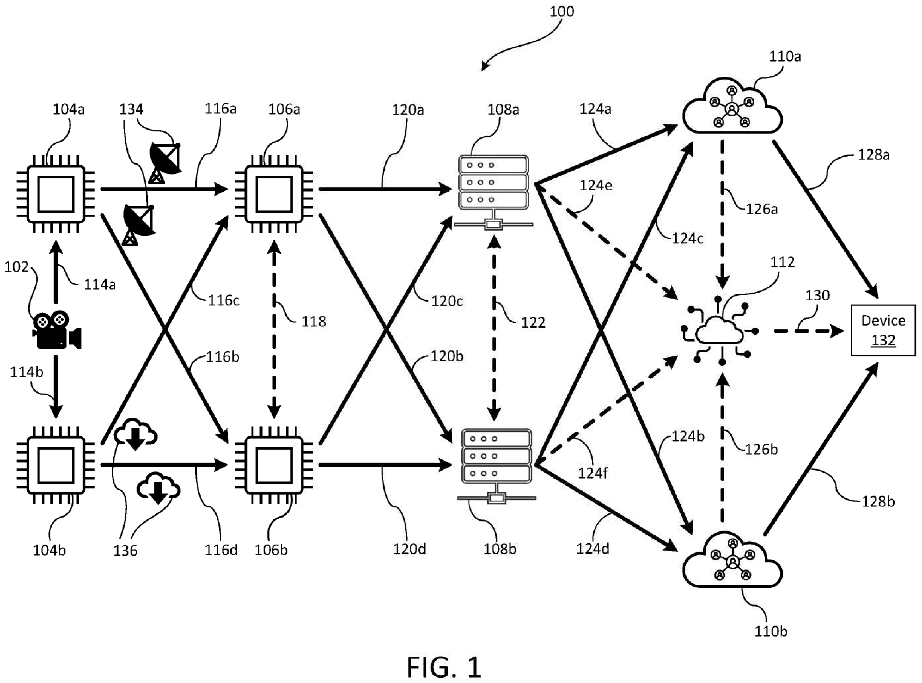

Figure 1 shows an example content delivery system 100. The example content delivery system 100 may comprise one or more components. The one or more components may comprise one or more content sources, such as content source 102; one or more contribution encoders, such as contribution encoders 104a and 104b; one or more distribution encoders, such as distribution encoders 106a and 106b; one or more origin servers, such as origin servers 108a and 108b; one or more content delivery networks (CDN), such as CDNs 110 and 110b; and one or more content steering servers, such as content steering server 112; as well as other components (not shown) associated with content delivery. Additionally, the content delivery system 100 may comprise one or more communication channels. The one or more communication channels may comprise communication channels 114a-b, 116a-d, 118, 120a-d, 122, 124a-f, 126a-b, 128a-b, and 130. The one or more communication channels may be configured to allow communication between the one or more system components.

The content delivery system 100 may be configured to provide system redundancy. For example, the content delivery system 100 may be configured with redundant components (e.g., multiple contribution encoders, such as 104a and 104b). Additionally, the content delivery system 100 may be configured with redundant communication channels (e.g., multiple communication channels, such as 116a, 116b, 116c, 116d). Moreover, the content delivery system 100 may utilize various communication protocols (e.g., DASH-IF Live Ingest, MPEG-2, and the like), different combinations of hardware and software (e.g., a first Windows-based encoder and a second Linux-based encoder), and combinations thereof.

A communication channel, such as the one or more communication channels 114a-b, 116a-d, 118, 120a-d, 122, 124a-f, 126a-b, 128a-b, and 130, may comprise a medium capable of transmitting information (e.g., raw data, signals, text, audio, video, and the like). For example, any of the communication channels 114a-b, 116a-d, 118, 120a-d, 122, 124a-f, 126a-b, 128a-b, and 130 may comprise an optical medium (e.g., optical fiber optic cables, free space optics (FSO), and the like); an electrical medium (e.g., transmission lines, coaxial cables, twisted pair cables, striplines, ethernet, HDMI, DVI, VGA, USB, and the like), a wireless medium (e.g., radio, satellite, infrared, Wi-Fi, Bluetooth, mobile communication systems, radio frequency identification (RFID), microwave, and the like), and other mediums associated with the transfer of information. Moreover, in some examples, an individual communication channel of the one or more communication channels may comprise a combination of mediums (e.g., communication channel 116a may comprise a fiber optic cable for a portion of its channel length and comprise a coaxial cable for the remaining portion of the channel length). Furthermore, in some examples, the one or more communication channels of the content delivery system 100 may comprise different mediums from one another (e.g., communication channel 116a may comprise a coaxial cable, communication channel 116b may comprise a fiber optic cable, communication channel 120d may comprise a satellite communication channel, etc.).

The content delivery system 100 may serve many functions. For example, the content delivery system 100 may deliver content from a content source (e.g., the one or more content sources, such as content source 102) to a destination, such as one or more user devices, such as user device 132 (e.g., a device of a user of the content delivery system 100). A user device, such as the user device 132 in FIG. 1, may comprise any computing device configured to receive and/or render content, such as a set-top box, a television, a display device, a computer, a smartphone, a laptop, a tablet, a multimedia playback device, or a portable electronic device.

The content delivery system 100 may be configured to send content residing on one or more system components (e.g., content stored on an origin server 108a, 108b or a CDN 110a, 110b) to one or more destinations (e.g., one or more user devices, such as user device 132). Moreover, the content delivery system 100 may store, copy, transcode, or otherwise act upon content provided by the one or more content sources, such as content source 102 (e.g., store content on an origin server 108, transcode content at a distribution encoder 106, etc.). The content delivery system techniques described herein are applicable to any delivery method, such as, for example, Dynamic Adaptive Streaming over HTTP (DASH), HTTP Live Streaming (HLS), the QAM digital television standard, and adaptive bitrate (ABR) streaming.

The content source 102 may produce, create, or act as the source of content to be distributed by the content delivery system 100. The content source 102 may comprise one or more input devices, such as devices utilized in the production of linear programing (e.g., for a television channel). For example, the content source 102 may comprise an input device capable of capturing video content, such as a camera capturing an event (e.g., a production in a studio, a live sporting event, and the like). As another example, the content source 102 may comprise an input device capable of capturing audio content, such as a microphone capturing sound (e.g., the commentary of sports announcers, music at a show, and the like). As another example, the content source 102 may comprise an input device capable of capturing textual content, such as a keyboard recording text (e.g., from transcribing a conversation, generating text, and the like). In some examples, the content source 102 may comprise a combination of several input devices capable of producing various content formats, such as a combination of video, audio, and textual input devices.

The content from the content source 102 may be configured in the form of raw data (e.g., a raw video or audio format sourced directly from an input device). The content may be uncompressed, such as in the form of RGB 4:4:4, 10-bit uncompressed video, composite digital signal, and the like. The uncompressed and/or raw data may be configured as a content stream (e.g., a video stream, an audio stream, a textual stream, and the like) capable of transmission (e.g., over a local network, the internet, and the like).

The content source 102 may be configured to transmit the content captured, produced, or created by the content source 102 to one or more contribution encoders, such as the contribution encoders 104a-b. In addition to the content itself, the content source 102 may also be configured to transmit information about the content, such as content metadata or other supplemental information related to the content captured, produced or created by the content source 102.

The one or more content sources, such as content source 102, may transmit the content and other information to a contribution encoder 104a through a communication channel 114a. Additionally, the content source 102 may transmit the content and other information to a contribution encoder 104b through a communication channel 114b. The content source 102 may be geographically close to the one or more contribution encoders 104a-b (e.g., in the same room, the same building, the same broadcasting site, and the like).

The one or more contribution encoders 104a-b may be configured to encode and package the content received from the content source 102. For example, the one or more contribution encoders 104a-b may compress received content (e.g., a raw video source feed) according to one or more codecs (e.g., AVS, H.265 (HEVC), H.266 (VCC), AV1, and the like). Additionally, the one or more encoders may configure received content into a "mezzanine" or intermediate format (e.g., DNxHD/DNxHR, Prores 422/422 HQ/4444, JPEG 2000, AVC, HEVC, and the like). In some examples, the one or more contribution encoders 104a-b may package content (e.g., compressed audio, compressed video, meta data, and the like) into a container file (e.g., MP4 (MPEG Part 14), QTFF (Quick Time File Format), MKV (Matroska), ISO-BMFF (ISO-Base Media File Format), and the like). Moreover, the one or more contribution encoders 104a-b may be configured to encode and/or package metadata (e.g., as an ISO Base Media File Format (ISO-BMFF), Common Media Application Format (CMAF), and extensions like Encoder Boundary Point (EBP) and TEMI boundary signaling).

Additionally, the one or more contribution encoders 104a-b may be configured to transmit information, such as content, using low latency protocols, such as RTP (Real Time Protocol), UDP (User Datagram Protocol), RTSP (Real-Time Streaming Protocol), RTMP (Real-Time Messaging Protocol), SRT (Secure Reliable Transport), and FTP (File Transfer Protocol), and the like. For example, contribution encoder 104a may transmit information to distribution encoder 106a (e.g., through communication channel 116a) and distribution encoder 106b (e.g., through communication channel 116b). Additionally, contribution encoder 104b may transmit information to distribution encoder 106a (e.g., through communication channel 116c) and distribution encoder 106b (e.g., through communication channel 116d).

The transmitted information from the one or more contribution encoders 104a-b to the one or more distribution encoders 106a-b may comprise encoded and/or packaged content. For example, a contribution encoder may transmit information comprising a stream of all Instantaneous Decoder Refresh (IDR) frames of encoded and packaged content to a distribution encoder. Additionally, the transmitted information may comprise metadata associated with content, and/or other information available to the one or more contribution encoders 104a-b.

The communication medium of the communication channels between the one or more contribution encoders 104a-b and the one or more distribution encoders 106a-b may comprise a medium capable of transmitting information, such as those described previously. For example, channels 116a and 116b may comprise a satellite transmission medium 134, and channels 116c and 116d may comprise a wired transmission medium 136. While this example configuration is shown in FIG. 1, it is understood that such communication channels (i.e., channels 116a-d) may comprise any other type of communication medium (e.g., the satellite transmission medium 134 of channel 116a could be replaced by the wired transmission medium 136, or any other type of communication medium described previously).

A distribution encoder, such as one of the distribution encoders 106a-b, may be configured to communicate with other distribution encoders of the content delivery system 100. The distribution encoder 106a may be configured to communicate with distribution encoder 106b through communication channel 118. The communication between distribution encoders 106a-b may comprise transmitting content. The communication between distribution encoders 106a-b may comprise transmitting information associated with the content (e.g., metadata associated with the content), information associated with the content delivery system 100 (e.g., information about system components or communication channels), and/or other types of information available at the distribution encoders (e.g., hardware and software specifications, formatting, programs running, etc.).

The distribution encoders 106a-b may decode, encode, package, and/or transmit content and associated information. The distribution encoders 106a-b may package content received from the contribution encoders 104a-b, such as by segmenting the content into content segments. For example, the distribution encoders 106a-b may generate content segments from the content received from a contribution encoder using any of a variety of adaptive bitrate streaming technologies, such as, for example, Moving Picture Experts Group (MPEG) Dynamic Adaptive Streaming over HTTP (DASH), Apple HTTP Live Streaming (HLS) or any other adaptive bitrate streaming technology. Using of any of these adaptive bitrate streaming technologies may comprise encoding content into one or more different versions of the content (e.g., different resolutions, different bitrates, and the like). The one or more different versions of the content may be segmented into content segments of having a particular presentation duration, such as, for example, a two-second presentation duration. The distribution encoders 106a-b may perform packaging of the encoded content segments (e.g., formatting in TS (MPEG-2 Transport Stream), fMP4 (fragmented MP4), and the like). The distribution encoders may make the content segments available through low latency transmission protocols. The distribution encoders may make the content segments available through HTTP-based protocols such as HLS (HTTP Live Streaming), DASH (Dynamic Adaptive Streaming over HTTP), MSS (Microsoft Smooth Streaming), RTMP (Real-Time Messaging Protocol), or the like.

The one or more distribution encoders 106a-b may be configured to communicate with one or more origin servers 108a-b. The one or more distribution encoders 106a-b may transmit (e.g., send) one or more content segments to the one or more origin servers 108a-b. Additionally, the distribution encoders 106a-b may send other information associated with the content segments (e.g., metadata) to the origin servers 108a-b. The information may comprise information available at the distribution encoders (e.g., hardware and software specifications, formatting, programs running, etc.). The distribution encoders 106a-b may communicate with the one or more origin servers 108a-b through a variety of different communication channels. For example, distribution encoder 106a may communicate with the origin server 108a (e.g., through channel 120a) and the origin server 108b (e.g., through channel 120b); and the distribution encoder 106b may communicate with the origin server 108a (e.g., through channel 120c) and the origin server 108b (e.g., through channel 120d).

Each of the origin servers 108a-b may comprise a Hypertext Transfer Protocol (HTTP) server configured to receive requests. For example, the one or more origin servers 108a-b may receive requests for content segments from one or more user devices 132, one or more CDNs 110a-b, one or more content steering servers, such as content server 112, and/or combinations thereof. The one or more origin servers 108a-b may receive requests for information about the availability of content segments, information associated with the content delivery system 100 (e.g., information about system components or communication channels), and other types of information available at the origin servers (e.g., hardware and software specifications, formatting, programs running, etc.).

The one or more origin servers 108a-b may generate and/or make available one or more adaptive bit rate (ABR) streams (e.g., using different ABR streaming formats). An ABR stream may comprise multiple representations of content segments (e.g., streams of content segments in different bitrates, resolutions, languages, and the like). Additionally, an ABR stream may comprise a manifest (e.g., a media presentation description (MPD) file). The manifest may comprise information about the multiple representations of content segments (e.g., the bitrates and resolutions available, and the network locations (e.g., uniform resource locators (URLs) of the individual content segments of each representation)).

An origin server, such as one of the origin servers 108a-b, may communicate with other origin servers of the content delivery system 100. For example, origin server 108a may communicate with origin server 108b (e.g., through channel 122), and vice versa. Origin servers may communicate regarding content segment information (e.g., segment arrival, segment availability, segment type, and the like). Origin servers may communicate regarding manifest information (e.g., manifest attributes, manifest availability, manifest URLs, and the like). Origin servers may communicate by sending content segments, information related to content segments (e.g., content segment metadata), information associated with the content delivery system 100 (e.g., information about system components or communication channels), and/or combinations thereof. Moreover, in some instances, origin servers may communicate regarding information available at the origin servers (e.g., hardware and software specifications, formatting, programs running, etc.). The information communicated between origin servers may be incorporated into a manifest file by one or more of the origin servers.

One or more of the system components of the content delivery system 100 may request data (e.g., content segments, manifests, system information, and the like) from the one or more origin servers 108a-b. For example, the one or more origin servers 108 may receive a request for content segments, a manifest associated with content segments, and/or a combination thereof from one or more user devices 132, one or more CDNs 110a-b, one or more content steering servers 112, and/or combinations thereof.

For example, the one or more origin servers 108a-b may communicate with the one or more CDNs 110a-b. For example, an origin server 108a-b may receive a request from a CDN 110a-b for content segments. In some instances, the CDN may make such request after receiving a request for content segments from a user device. A CDN 110a-b may receive one or more ABR streams from an origin server 108a-b. In the example of FIG. 1, the origin server 108a may communicate with CDN 110a (e.g., through channel 124a) and/or CDN 110b (e.g., through channel 124b). Additionally, the origin server 108b may communicate with CDN 110a (e.g., through channel 124c) and/or CDN 110b (e.g., through channel 124d).

The one or more CDNs 110a-b may comprise "edge" or proxy servers. The CDNs 110a-b may cache content received from origin servers, such as content segments of a content stream. When a user device (e.g., user device 132) requests content from an origin server (e.g., origin server 108a), the request may be redirected to a cached copy of the content (e.g., content segments). The CDN may be located in a geographically similar location to the user device requesting content. In some instances, the CDNs 110a-b may provide load balancing to the content delivery network 100 (e.g., handling network traffic spikes, increases in demand, and the like).

The one or more CDNs 110a-b may communicate with one or more user devices 132. For example, CDN 110a may communicate with one or more user devices 132 through communication channel 128a. Additionally, CDN 110b may communicate with one or more user devices 132 through communication channel 128b. For example, a CDN 110a-b may send content segments, such as the content segments of an ABR stream of content, and/or a manifest associated with the content, to a user device. The content segments may be sent in response to one or more requests (e.g., HTTP requests) by the user device. An ABR stream of content may have been cached by the CDN and received from one or more origin servers.

The one or more origin servers 108a-b may communicate with one or more content steering servers, such as content steering server 112. For example, the content steering server 112 may request one or more of the origin servers 108a-b for information related to content segments. The request for information related to content segments may be in response to the content steering server 112 receiving a request from a user device or independent of a request from a user device. The one or more origin servers 108a-b may send a manifest, such as a manifest related to content segments, to the content steering server 112. The content steering server may use the communication to direct content segments, and/or content segment requests, from a particular source (e.g., origin server 108a, CDN 110a, and the like) to one or more user devices.

The origin servers 108a and 108b may communicate with the content steering server 112 (e.g., through channels 124e and 124f, respectively). For example, origin servers 108a and 108b may offer or make available a manifest, or information related to a manifest, to the content steering server 112. In other instances, the content steering server 112 is optional, and the one or more origin servers 108 do not communicate with a content steering server.

The content steering server 112 may communicate with one or more user devices 132. For example, a user device of the one or more user devices 132 may send a request (e.g., an HTTP GET request) for content to the content steering server 112. The content steering server 112 may send a manifest, and/or information related to a manifest, to the user device (e.g., in the form of an ABR stream). The content steering server 112 may have received the manifest and/or information related to the manifest from an origin server. The user device may use the manifest received from the content steering server 112 to request content segments from one or more components of the content delivery system 100 (e.g., origin server 108a, CDN 116a, and the like).

The content steering server may assist in the routing of content through the content delivery system 100. For example, the content steering server 112 may use information received from one or more origin servers 108 to route content to one or more users 132. The received information may comprise a manifest associated with requested content. Additionally, the content steering server 112 may use information received from one or more CDNs 110a-b to route content to one or more users 132. In some instances, the content steering server 112 may use a combination of information received (e.g., information from an origin server and a CDN) to route content to one or more users 132.

Routing content may comprise sending an indication to one or more user devices 132 to select a particular CDN among a plurality of CDNs (e.g., telling a user device to request content from a particular origin server, CDN, and/or the like). Additionally, routing content may involve sending an indication to one or more user devices 132 to switch a content session with a first CDN (e.g., CDN 110a) to a second CDN (e.g., 110b). A content steering server may route content based on several considerations. For example, the content steering server 112 may route content based on segment availability (e.g., earliest availability at particular locations and/or at the anticipated destination), load balancing (e.g., of the network and/or individual components), network conditions, geographical distance, and/or combinations thereof. In some instances, the content steering server 112 may use the communications received to inform the content delivery system 100 of information related to the components of the content delivery system 100 (e.g., segment availability of content at each origin server of the content delivery system).

While the example system 100 of FIG. 1 is shown to comprise just two contribution encoders, two distribution encoders, two origin servers, and two CDNs, it is understood that this is just an example and that a content distribution system, such as system 100, may comprise any number of components. Similarly, there may be additional communication channels that are shown in FIG. 1, and various communication channels may be deactivated and reactivated.

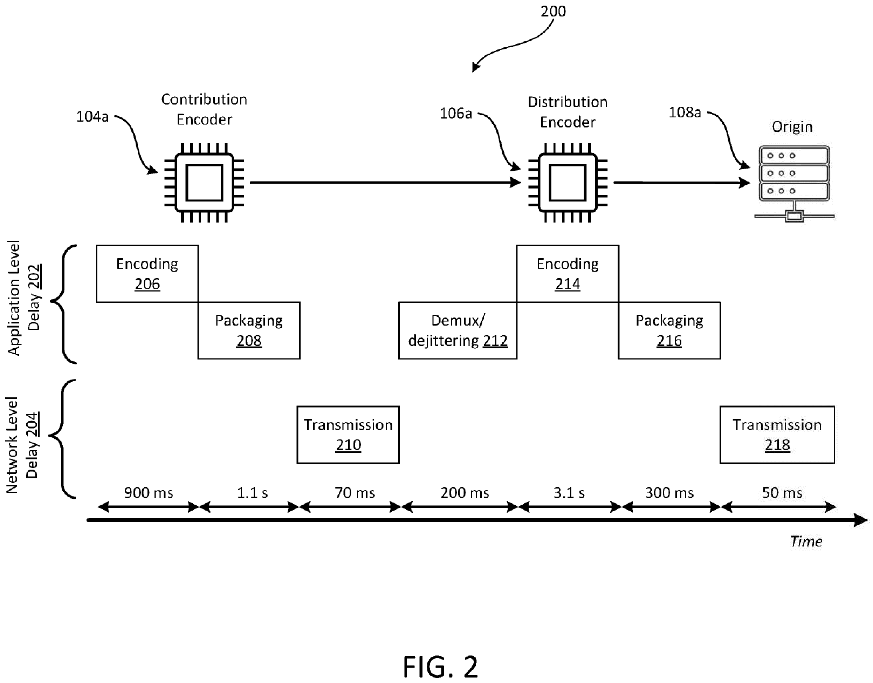

FIG. 2 shows an example of contribution path latency as content is received from a content source and processed along a path from a contribution encoder, such as contribution encoder 104a, to an origin server, such as origin server 108a. As shown, there may be both application-level delays 202 and network-level delays 204 associated with the processing and transmission of content from a contribution encoder to an origin server.

In the example content path 200, content may start at a contribution encoder 104a. The content may have been received from a content source (e.g., the content source 102). The contribution encoder 104a may perform an encoding process 206, which may introduce a latency of 900 ms, and a packaging process 208, which may introduce a latency of 1.1s. As further shown, the contribution encoder 104a may transmit the encoded and packaged content via a transmission process 210 to distribution encoder 106a, which may introduce a further latency of 70 ms. It is understood that the latency times shown in FIG. 2 are merely examples and that actual latency may be greater or lower than illustrated in FIG. 2.

The distribution encoder 106a may perform a demux/dejittering process 212 on the transmitted content, which may introduce a latency of 200 ms. For example, the demux and/or dejittering process 212 may comprise converting the packaged content from a single stream into a plurality of streams (e.g., a De-Multiplexer process); stabilizing, repairing, or otherwise correcting displacements in the packaged content; and/or preparing the received content for processing such as transcoding, encoding, packaging, and the like. The distribution encoder 106a may perform an encoding process 214, which may introduce a latency of 3.1 s, and a packaging process 216, which may introduce a latency of 300 ms. As further shown, the distribution encoder 106a may transmit the encoded and packaged content via a transmission process 218 to an origin 108a, which may introduce a further latency of 50 ms.

As seen in FIG. 2 and described above, each of the processes 206-218 may introduce latency in the example content path 200. It is understood that the time delay labels (e.g., 900 ms for encoding 212, 1.1 s for packaging 214, etc.) are for illustrative purposes. The labels may not be to scale, and in some instances may not be representative of an exact delay associated with their corresponding process.

In a traditional redundant content delivery system, the system may be largely oblivious to latencies between its components. Moreover, within the complex arrangement of the redundant content delivery system, there are many sources of latency affecting the timing of content delivery at the various components and eventually the one or more viewers. Therefore, there may be many sources of latency in a redundant content delivery system that are unaccounted for.

For example, one source of latency may be related to the geographical distance (e.g., physical separation) among system components. As an example, a particular piece of content may start in one geographical location (e.g., a London-based studio with encoders) and be distributed to other geographical locations (e.g., origins located in the United Kingdom, Japan, and Western United States). In this example, the content may take different paths (e.g., London to the United Kingdom; London to Japan, Japan to Western United States, etc.), and the absolute times at which the same frame of the content will be available in the different geographical locations may differ as a function of latency contribution.

Another source of latency may be related to the individual components that comprise the redundant content delivery system. For example, a system component receiving, acting upon, and/or sending content data (e.g., copying, transcoding, creating a manifest, etc.) may deploy computational resources and time, which may adding delay to the availability of the original content data and the acted upon content data. Additionally, the latency across similar component types (e.g., the end-to-end delay across contribution encoders 104a and 104b) may be different. For example, similar component types may utilize different hardware (e.g., different central processing units (CPUs), accelerators, memory, storage, etc.) that perform identical operations at different speeds. Moreover, similar component types may utilize different underlying software (e.g., Linux versus Windows Server), even though they are performing the identical operations (e.g., segmenting content). Furthermore, similar component types may perform different operations, produce different output types, or both. Moreover, due to the dynamic nature of content production, some combinations of hardware, software, and operation type may be faster in one point in time, and slower at another point in time.

Another source of latency may be related to the communication links between system components. In some instances, the links between the components may comprise different materials. The links may comprise optical, electrical, and wireless mediums, and combinations thereof. For example, distribution encoder 106a may receive content from two sources: contribution encoder 104a through communication channel 116a, and contribution encoder 104b through communication channel 116c. The communication channel 116a may comprise a satellite transmission medium 134, and the communication channel 116c may comprise a wired transmission medium 136. The satellite transmission medium 134 may have a higher latency value (e.g., slower data transfer rate) compared to the wired transmission medium 136.

Another source of latency may be related to the transmission protocols used to communicate between the system components. For example, the use of different protocols (e.g., DASH-IF Live Ingest vs MPEG-2 TS vs RTP+FEC) between the one or more distribution encoders 106 and the one or more origin servers 108 (or a packager server) may result in different latencies. Furthermore, transmission latency may be result from network conditions, weather conditions, viewer demand, load balancing, and/or the like.

In light of these many sources of latency, determining which combination of system components and communication paths provide the lowest latency delivery of content presents many technical challenges. In addition to the technical latency problems described above, in a traditional redundant content delivery system, it may not be apparent from the perspective of any given component (e.g., a distribution encoder, an origin server, etc.) what input among a plurality of inputs is providing the earliest content data. As a result, in a traditional redundant content delivery system, these sources of latency (e.g., time differences in content delivery at particular components) are typically ignored. Said differently, optimal system component selection (e.g., origin selection, CDN selection, distribution encoder selection, etc.) is performed ignoring the difference in delays between the initial acquisition (e.g., output of a news studio playout system) and the output of a particular component (e.g., distribution encoder output).

Relatedly, in some traditional redundant content delivery systems, a distribution encoder receiving multiple content streams (e.g., streams from different contribution encoders, streams from different communication channels, streams in different transmission protocols, etc.) may be unaware of which content frames of a particular content stream correspond with the same or substantially same content frames of the rest of the multiple content streams. Thus, a distribution encoder may be unaware of what content stream among a plurality of content streams is producing the most up to date (e.g., earliest produced) frames. Moreover, in traditional systems, the internal clocks of different distribution encoders may be unsynchronized. Thus, a plurality of distribution encoders, and/or an origin server receiving input from the plurality of distribution encoders, may be unaware of which distribution encoder is receiving the most up to date frames. For example, if distribution encoder A received a content item at an internal time of 0:01, and distribution encoder B received the content item at an internal time of 0:02, it may not be the case that distribution encoder A is receiving content earlier than distribution encoder B. In situations where there are a plurality of distribution encoders receiving a plurality of content streams, these problems may be compounded, and the effect may be propagated to system components later in the content delivery system (e.g., origin servers, CDNs, user devices, and the like).

Thus, the approach of the traditional redundant content delivery system has many shortcomings. For example, the traditional approach may result in increased delay (e.g., latency) in the delivery of content (e.g., to a user device) due to sub-optimal component selection (e.g., selection of content source among a plurality of components distributing content) at multiple stages of the content delivery process. Moreover, the traditional approach may result in a higher probability of download errors due to timing mismatch. In some instances, degradation of the system may be especially noticeable when the segments are used for low latency streaming and/or the overall system is geographically distributed.

Described herein are methods, devices, and systems to address these shortcomings and improve upon content delivery systems. A content delivery system may enable seamless selection of, and failover between, multiple components (e.g., encoders, packagers, and origin servers). System components, such as encoders, may generate or pass through timing information associated with the time at which content (e.g., content frames or segments) is received, available, and/or processed at that system component. Additionally, system components may send or make available the timing information to other components, such as encoders or origin servers. The timing information may be used to generate latency values, and the latency values may be associated with the earliest availability of one or more segments of content at each of the one or more origin servers. The latency values may be incorporated into a manifest, and the manifest comprising latency values may enable a user device, CDN, content steering server, or combination thereof to request content segments from the lowest latency origin. Such methods, devices, and systems may provide the lowest-latency selection of system components and/or cost reductions for the highest-latency components while retaining system redundancy. The examples described herein may apply to all content types, such as video, audio, and text.

A content source, such as the content source 102 of FIG. 1, may capture, generate, produce, or otherwise provide a source of content. The content source may comprise one or more devices capable of capturing content, such as cameras, microphones, keyboards, sensors, controllers, scanners, computers, and the like. In some examples, the content source may be associated with a television network, a content provider, a content creator, a sports team, and/or the like. Moreover, the content source may provide content for linear programing (e.g., a television channel) that may be distributed in a fully redundant content delivery system.

The content source may send (e.g., transmit, distribute, or otherwise make available) the content. For example, the content source may send the content (e.g., in the form of one or more content streams) to one or more contribution encoders (e.g., contribution encoders 104a-b of FIG. 1). The content may be sent via one or more communication channels, such as communication channels 114a-b. The content may be sent as uncompressed and/or raw data (e.g., a raw output directly from a camera or microphone). In some instances, the content may comprise frames of the content (e.g., video frames, audio frames, and/or the like).

The contribution encoders may perform encoding and/or packaging of the content, such as the encoding and/or packaging processes described above in regard to contribution encoders 104a-b. Additionally, the contribution encoders may generate timing information, which may comprise one or more timestamps indicating the time at which a content frame was received, encoded, and/or packaged. For example, a contribution encoder may generate a first timestamp associated with the time at which a first content frame was packaged, a second timestamp associated with the time at which a second content frame was packaged, so on and so forth. Furthermore, the contribution encoders may transmit the generated timing information alongside the encoded and/or packaged content. For example, the one or more timestamps may be inserted into a 'prft' ISO-BMFF box (e.g., where content frames are packaged according to an MPEG format or other ISO base media file format); inserted into an extension, such as an EBP descriptor; and/or signaled using a signaling standard, such as SCTE-35.

As an example of the above description, the contribution encoder 104a may have completed packaging a first content frame at a time of "00: 10:23" (hour/minute/second). The contribution encoder 104a may generate timing information for this first content frame comprising the timestamp of "00: 10:23." Additionally, the contribution encoder 104a may have completed packaging a second frame at a time of "00: 10:25." The contribution encoder 104a may generate timing information for this second content frame comprising the timestamp of "00: 10:25." These sets of timing information, associated with the first frame and the second frame, may be transmitted alongside the encoded and packaged first frame and second frame, respectively (e.g., as a 'prft' ISO-BMFF box, an EBP descriptor, SCTE-35 signal, or the like).

The contribution encoders may send the encoded and/or packaged content frames, which may comprise timing information associated with the content frames, to one or more distribution encoders. As described in FIG. 1, the one or more distribution encoders may receive content frames from multiple sources, such as multiple inputs (e.g., content from multiple contribution encoders), multiple paths (e.g., content from a single contribution encoder sent through multiple paths), and combinations thereof.

The one or more distribution encoders may record the time at which one or more content frames are received from each source (e.g., input or path). Additionally, distribution encoders may establish an association of content-identical content samples from multiple inputs and/or paths. For example, distribution encoder 106a may receive encoded and/or packaged content frames from two inputs, contribution encoders 104a and 104b. The distribution encoder 106a may record the time at which each content frame is received at the distribution encoder from each contribution encoder, respectively. The distribution encoder may further determine which content frames received from contribution encoder 104a are content-identical to the content frames received from contribution encoder 104b.

In some examples, determining content-identical content samples may be based on timing information transmitted by the one or more contribution encoders. For example, as described above, the timing information transmitted from a contribution encoder may comprise a timestamp associated with a content frame. The distribution encoder may compare these timestamps received from multiple inputs, paths, and combinations thereof, and may determine which frames have the same or similar timestamp, which may indicate content-identical samples.

Alternatively, or in addition to establishing an association of content-identical content samples based on timing information, associating content-identical content samples may be based upon other methods, such as an out-of-band configuration (e.g., determining content-identical samples with the use of devices that may not be the distribution encoders themselves, such as an external server); associating content-identical content samples may involve the use of algorithms based on frame properties (e.g., cryptographic hash, color and edge histograms, and the like); and/or a similar method for determining identical or near-identical samples of content.

A distribution encoder may, based on the determination of content identical samples and/or the recorded receipt time of those content identical samples, determine a lowest-latency source among a plurality of sources. For example, distribution encoder 106a may receive encoded and packaged content from contribution encoders 104a and 104b. Contribution encoder 104a may have sent a first frame alongside timing information comprising a timestamp "00: 10:23" (hour/minute/second). The distribution encoder 106a may have recorded that the first frame arrived at a time of "04:00:01." Contribution encoder 104b may have sent a second frame alongside timing information comprising a timestamp of "00:10:23." The distribution encoder 106a may have recorded that the second frame arrived at a time of "04:00:05." The distribution encoder 106a may determine, based on the identical timestamp values, that the received first and second frames are content-identical samples. This process may be repeated for multiple frames (e.g., distribution encoder 106a may establish more than one content-identical samples). The distribution encoder 106a may determine that contribution encoder 104a is the lowest-latency source because the first and second frames are content identical and that the first frame was received four seconds quicker compared to the second frame.

A distribution encoder may select a primary source among a plurality of sources based on the determined lowest-latency source. Continuing the above example, distribution encoder 106a may select contribution encoder 104a as the primary source because contribution encoder 104a was determined to be the lowest-latency source. The distribution encoder may use the selected primary source to perform processes such those described in relation to FIG. 2 (e.g., demultiplexing and/or dejittering, encoding, and/or packaging of content). Relatedly, a distribution encoder may select one or more secondary sources among the plurality of sources. The selected one or more secondary sources may be associated with sources that are not the lowest-latency source. Continuing the above example, distribution encoder 106a may select contribution encoder 104b as the secondary source because it was not determined to be the lowest-latency source.

Similar to how an individual distribution encoder may establish content-identical samples among a plurality of sources, a plurality of communicating distribution encoders may establish content-identical samples among the plurality of communicating distribution encoders. For example, communicating distribution encoders may establish an association of content-identical content samples at each distribution encoder based on timing information (e.g., timestamps), an out-of-band configuration, and/or algorithms based on frame properties. Communicating distribution encoders may use established content-identical samples to coordinate the generation of content segments, occurring at different distribution encoders, to start with an identical frame.

As an example of the above description, the distribution encoder 106a may communicate with the distribution encoder 106b to establish content-identical samples. As noted above, distribution encoder 106a may have received a first frame alongside timing information comprising a timestamp "00:10:23." Similarly, distribution encoder 106b may have received a third frame alongside timing information also comprising a timestamp "00:10:23." The distribution encoders 106a-b may determine that the first frame received by distribution encoder 106a, and the third frame received by distribution encoder 106b, are content-identical samples because they have the same timestamp. This process may be repeated for multiple frames (e.g., distribution encoders 106a-b may establish more than one content-identical samples). Upon identifying a content identical sample, the distribution encoders 106a-b may coordinate the generation of segments to start with the same content-identical frame (e.g., the first and third frames comprising a timestamp "00:10:23").

Similar to the description above regarding the contribution encoders, the distribution encoders may also generate timing information. The timing information may comprise a timestamp. The timestamp may indicate the time at which a first frame of a particular content segment was generated. The timestamp may indicate the time at which the first frame of the particular content segment was encoded, packaged, or otherwise ready for transmission.

The distribution encoders may transmit the timing information alongside the content segments, and there are many ways to accomplish such transmission. As one example, if the distribution encoder is using DASH-IF Live Ingest or plain DASH origin, the distribution encoder may insert the timing information as a 'prft' ISO-BMFF box into a segment. In another example, if the distribution encoders generate a manifest (e.g., an MPD file), the timing information may be incorporated into the manifest. Moreover, the timing information may be incorporated into a manifest that was generated before the segment was generated. Such a case may utilize an MPD@availabilityStartTime attribute, which may be kept coordinated among communicating distribution encoders and set to an absolute date (e.g., 1/1/1970 0:00:00.000 GMT). In yet another example, distribution encoders may use the timestamp of the first frame of the segment to name the segment (e.g., using the time-based MPEG DASH addressing) to document the input timing value. In a fourth example, where the distribution encoders are outputting a transport stream format, the input timing value may be associated with segment boundaries of the transport stream. In such a case, if the distribution encoder is using MPEG-2 TS, the timestamp of the first frame of the segment may be included in the EBP descriptor or another adaptation field.

The distribution encoders may transmit encoded and packaged content segments, which may comprise timing information. Each of the one or more origin servers, such as origin servers 108a-b, may receive one or more content segments. The content segments may comprise timing information associated with the plurality of encoders (e.g., distribution encoders). The content segments (and any timing information) may be received from a plurality of sources (e.g., from distribution encoders, from multiple paths, in multiple formats, and combinations thereof).

An origin server receiving the content segments, which may comprise timing information associated with a plurality of sources (e.g., encoders) may determine a source providing the earliest availability of content segments. Determining the source (e.g., a distribution encoder) providing the earliest availability may be based on timing information. For example, the determination may be based on a comparison of timestamps associated with content segments received from the plurality of sources. In such a comparison, the origin server may determine that the source providing the earliest timestamps is providing the earliest availability of content segments.

As an example of the above description, the origin server 108a may receive content segments from distribution encoders 106a and 106b. The origin server 108 may also receive timing information from both distribution encoders 106a and 106b, and the timing information may comprise a timestamp indicating the time at which the first frame of a particular content segment was generated (at each distribution encoder, respectively). The timing information may have been inserted as 'prft' ISO-BMFF boxes into the particular segment. The origin server may compare the timing information, and the distribution encoder that has the earliest (i.e., smallest) timestamp may be determined to be providing the earliest availability of content segments. In some examples, comparing timing information among sources may additionally be referred to as determining (e.g., calculate, estimate, or the like) an overall time distance for each source.

The origin server may select the source providing the earliest availability as a primary source. The origin server may use the selected primary source to receive content segments from and may make those content segments available to other system components (e.g., CDNs, content steering servers, user devices, and combinations thereof). Additionally, the origin server may select one or more sources that are not providing the earliest availability as one or more secondary sources that may be used for failover and redundancy purposes. The distinction between "primary" and "secondary" sources may be an internal state only (i.e., internal to the origin server making the selection) and not communicated to user devices.

One or more origin servers may generate one or more latency values based on the determined earliest availability of content segments at each origin server. When there is a plurality of origin servers, a latency value generated by a particular origin server may be associated with its relative latency among the plurality origin servers (e.g., the relative availability of one or more of the content segments at the particular origin server among a plurality of other origin servers). In some instances, an origin server's relative latency may be referred to as a relative time distance. The relative latency of an origin server may reflect the availability of one or more content segments at that particular origin server relative to the availability of that same one or more content segments among the plurality of origin servers.

The one or more latency values of a particular origin server may be indicated with an availability time offset attribute associated with the relative latency of the particular origin server. For example, the relative latency of an individual origin server may be associated with the time difference between (1) an availability start time at the individual origin server and (2) either of (a) a latest availability start time among all the one or more origin servers or (b) an earliest availability start time among all the one or more origin servers.

As an example, origin server 108a may receive from distribution encoder 106a, a particular content segment. The origin server 108a may also receive timing information, such as a timestamp, indicative of a time at which a first frame of the content segment was generated by the distributed encoder 106a. The origin server 108a may determine that the particular content segment was received at an absolute arrival time of 00:00:01 (hour/minute/second). This absolute arrival time may be used as the availability start time for the particular content segment at origin server 108a. Origin server 108b may receive a version of the same content segment (which may be determined by the fact that it contains the same timestamp as the version received by origin server 108a). But, in this example, origin server 108b may receive the content segment at an absolute time 00:00:02 - which may be used as the availability start time for the particular content segment at origin server 108b.

In this example, the particular content segment associated with the same timestamp was latest arrived at both origins 108a and 108b by absolute time 00:00:02, which may represent the latest availability start time across all communicating origins. If the availability time offset attribute is based off latest availability start time across communicating origins 108a and 108b, origin server 108a may have an availability time offset attribute set to 00:00:01, and origin server 108b may have an availability time offset attribute set to 00:00:00.

Moreover, in this example, the particular content segment associated with the same time stamp was earliest arrived at both origins 108a and 108b by absolute time 00:00:01 and may represent the earliest availability start time across all communicating origins. If the availability time offset attribute is based off earliest availability start time across communicating origins 108a and 108b, origin server 108a may have an availability time offset attribute set to 00:00:00, and origin server 108b may have an availability time offset attribute set to 00:00:01.

The latency values generated by the plurality of origins may be incorporated into one or more manifests (e.g., an MPD) as availability time offset attribute (e.g., an MPD@availabilityTimeOffset attribute). Where the plurality of origin servers communicate, the communicating origin servers may offer a single manifest comprising the one or more latency values of each communicating origin server. Where the plurality of origin servers do not communicate, each origin server may individually offer a manifest file comprising its respective latency value.

The plurality of origin servers may send, or otherwise make available, the one or more manifests comprising one or more latency values to one or more system components (e.g., content steering servers, user devices, CDNs, and the like). Sending or otherwise making available the one or more manifests may be in response to a request for content from the one or more system components. The request for content may be made directly to an origin server (e.g., user device 132 directly communicating with origin server 108a) or indirectly to an origin server (e.g., user device 132 indirectly communicating with origin server 108a through content steering server 112). The one or more system components may determine the lowest-latency origin server among the plurality of origin servers based on the one or more latency values associated with the one or more segments of the content at each origin server. In some instances, determining the lowest-latency origin based on only the one or more latency values may be considered a default determination, and the default determination may be adjusted based on other factors. The one or more system components may select the determined lowest-latency origin as the origin from which the one or more system components may request content segments from.

For example, a user device 132 may directly request (e.g., using a HTTP GET request) content from origin servers 108a-b. The origin servers 108a-b may return one or more manifests comprising latency values as availability time offset attributes. If origin servers 108a and 108b communicate, one or both of the origin servers may return a single manifest comprising both latency values (e.g., availability time offset attributes corresponding to each origin server). If origin servers 108a and 108b do not communicate, each origin server may individually provide a manifest file comprising its respective latency value. The user device 132 may use the latency values to determine the lowest latency origin server. For example, the user device 132 may determine the lowest latency origin server to be the origin server associated with the lowest availability time offset attribute, where such attributes are based off earliest availability start time across origins. The user device 132 may select the determined lowest latency origin server as the default determination.

Similarly, the user device 132 may indirectly request content from origin servers 108a-b through another (e.g., intermediary) system component, such as content steering server 112 or either CDN 110a-b. For example, the user device 132 may send a request for content to the content steering server 112, CDN 110a, CDN 110b, or a combination thereof. The request for content may be relayed to the one or more origin servers 108a-b, and the one or more origin servers may return one or more manifests comprising latency values to the intermediary component.

When a user device 132 indirectly requests content, the one or more intermediary components (i.e., the content steering server 112 or CDNs 110a-b in this example) may determine the lowest latency origin server for the user device 132. For example, similar to the situation where the user device 132 directly requests content, the intermediary device may determine the default origin server based on one or more latency values comprising the one or more manifests. The intermediary device may communicate this determination to the user device. Alternatively, the intermediary component may transmit the one or more manifests comprising latency values to the user device 132, and the user device 132 may determine the lowest-latency origin server based on the one or more latency values associated with the one or more segments of the content at each origin server.

In some examples, the determined lowest-latency origin server may be considered a default determination, and the default determination may be adjusted. For example, in some instances, the determined default origin server may in fact be the origin server capable of providing the earliest arrival time of content segments to the user device. However, in other instances, the introduction of edge latency due to factors such as component distance, network conditions, weather conditions, system maintenance, and the like may make it such that the determined default origin server is not providing the earliest arrival time of content segments to the user device compared to another origin server. Edge latency may refer to latency between components delivering content from an origin server to a user device (e.g., latency between an origin server and a CDN, latency between a CDN and the user device, etc.). Thus, it may be appropriate to adjust the default determination of the lowest-latency origin server.

The one or more system components may adjust the default selection based on edge latency, which may be determined in many ways. Using the content steering server as an example, the content steering server may determine the edge latency by receiving information related to one or more latencies (e.g., the edge latency) associated with communication channels between one or more user devices, one or more CDNs, and/or one or more origin servers. For example, the requesting user device may supply latency information (e.g., an edge latency from the user device to a CDN, origin server, or combination thereof) using HTTP request headers or HTTP query parameters the content steering server (e.g. using Common Media Client Data (CMCD). In some instances, the latency information may comprise information associated with time to first and last byte of a request. Additionally, the content steering server may determine the edge latency based on geographical information. For example, the content steering server may collect and use geographical information (e.g., geographical information obtained using the user device's IP) to geographically locate the client or user. In some instances, the determined edge latency may be based on a combination of determinations (e.g., received information related to latencies, geographical information, and/or the like).

Continuing with this example, the content steering server may use the determined edge latency to adjust the default selection of the lowest-latency origin server. For example, if the determined edge latency associated with the determined default origin server is such that content arrives at a user device at a later arrival time compared to another origin server, the content steering server may adjust selection of the lowest-latency origin server from the determined default origin to the other origin server providing the earliest arrival time of content segments to the user device.

While the above example uses the content steering server to adjust the default selection of the lowest-latency origin server, other devices may similarly adjust the default selection. The user device may adjust the default selection of the earliest origin server based on edge latencies between, for example, an origin server and a CDN, the CDN and the user device, and/or a combinations thereof. These edge latency may be determined by the user device or an intermediary device (e.g., a content steering server monitoring the content delivery system) determining and communicating edge latencies.

In some instances, the one or more user devices may switch origin servers (or a corresponding CDN acting as an intermediary in content delivery). Switching origin servers (or CDNs) may comprise moving from a determined earlier origin to a determined later origin, and vice versa. The switch may be in response to determined edge latencies requiring an adjustment of the lowest-latency origin server. Additionally, the one or more user devices may be requested to switch origin servers by a system component (e.g., a content steering server) to achieve load balancing of the content delivery system (e.g., not overload one origin server to provide a lower latency experience for all clients and user devices).

In some instances, when one or more user devices switch origin servers (or CDNs), the one or more user devices may temporarily slow down the playback of content and/or reduce buffer size to adjust for the change. Additionally, and/or alternatively, a user device may keep a fixed latency corresponding to a later origin, but download from an earlier origin server for buffer stability purposes.

In some examples, an algorithm may be used to determine and select the lowest-latency origin, such as a shortest path algorithm. For example, system latencies (e.g., input timings, edge latencies, overall time distances, and other time-associated delays) may be measured at each hop (e.g., system components, communication channels, and the like) between a content source (e.g., a content capture point at a studio or stadium) and one or more user devices. For example, the system may resemble the content delivery system 100, and system latencies may be measured at system components such as one or more encoders, one or more packagers, one or more origins, one or more CDNs/nodes, one or more content steering servers, and one or more user devices. The measured latencies may comprise the weights of a shortest path algorithm. In some examples, a centralized computing device may be configured to determine the shortest path and assign content delivery through particular origins, CDNs, and the like to one or more user devices. The centralized computing device may be a content steering server, a user device, or another system component may run the shortest path algorithm. The resulting system selections may be adjusted to provide a degree of load balancing (e.g., avoid overloading optimal CDNs/nodes).

In the above examples, one or more system components (e.g., contribution encoders, distribution encoders, and origin servers) may be selected as "secondary" sources. These secondary sources may be providing higher-latency content delivery to one or more system components and may have few or no viewers for whom it is optimal to receive that output (e.g., its output is not being relied upon by other system components to deliver content to one or more user devices). These secondary sources may be moved to a standby mode, a disaster recovery mode, and/or a combination thereof. A standby or disaster recovery mode may encode no content frames and/or segments, or only encode select representations of the content segments and/or frames. For example, a distribution encoder in standby and/or disaster recovery mode may encode one or more segments in a reduced representation, such as a single representation of content, a low-resolution representation of content, a low-bitrate representation of content, a single stereo (or mono) audio representation (e.g., per each audio component), and combinations thereof.

One or more system components in a standby or disaster recovery mode may consume less power, save a significant part of system computing power, decrease operational costs, and promote other like benefits. Moreover, one or more system components in a standby or disaster recovery mode may support system redundancy. For example, keeping one or more encoders in a standby or disaster recovery mode may be beneficial (compared to stopping encoding altogether) because the one or more encoders in a standby or disaster recovery mode may be made (e.g., assigned or reassigned as) a primary encoder quickly and efficiently. In such a case, moving an encoder from a standby or disaster recovery mode to primary may involve spawning more CPU threads, which may increase efficiency, increase system stability, and decrease latency (e.g., delay in encoding content and the subsequent delivery of that content) as it may not require further operations overhead (e.g., booting time, searching for a signal, synchronizing among other system components, etc.).

In some examples, one or more packagers, one or more origin servers, and like devices may be producing "later" output (e.g., not providing another system components with the earliest content segments). For example, one or more origin servers may be producing later output and may have few or no viewers for whom it is optimal to receive that output (e.g., its output is not being relied upon by other system components to deliver content to one or more user devices). In some instances, the one or more origin servers producing later output may be put into a dormant mode. Origin servers in the dormant mode may receive no incoming content segments. Alternatively or in addition, origin servers in the dormant mode may receive only single-representation incoming segments (e.g., only a lowest resolution video, a stereo/mono audio segment, and the like) using DASH-IF Live Ingest or MPEG-2 TS (e.g., via multicast, SRT, or RTP) until one or more origin servers not in dormant mode fail. Setting one or more packagers, one or more origin servers, and combinations thereof into a dormant mode may reduce the backbone network traffic while maintaining system redundancy.

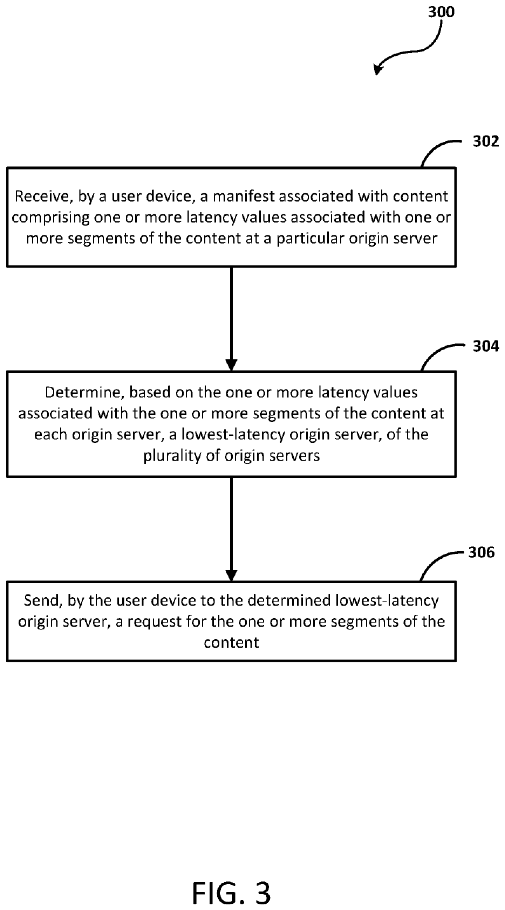

FIG. 3 shows an example method. The example method 300 may be performed by one or more user devices, such as the one or more user devices 132 shown in FIG. 1. At step 302, a user device (e.g., a user device 132) may receive a manifest associated with content. The manifest may be a media presentation description file associated with an adaptive bitrate streaming protocol. The manifest may comprise, for each of a plurality of origin servers, one or more latency values associated with one or more segments of the content at a particular origin server. The one or more latency values may be associated with the relative availability of the one or more segments of content at the particular origin server, and the particular origin server may be among the plurality of origin servers.

The one or more latency values may comprise an availability time offset attribute associated with a relative latency among the plurality of origin servers. The relative latency of an individual origin server may be associated with the difference between an availability start time at an individual origin server and either of a latest availability start time among each of the plurality of origin servers, or an earliest availability start time among each of the plurality of origin servers. The relative latency of an origin server may reflect the availability of one or more content segments at that particular origin server relative to the availability of that same one or more content segments among the plurality of origin servers.

At step 304, the user device may determine a lowest-latency origin server of the plurality of origin servers. The determination of the lowest-latency origin server may be based on the one or more latency values associated with the one or more segments of content at each origin server. For example, in a scenario in which the one or more latency values comprise availability offset attributes, the lowest-latency origin server may be the origin server exhibiting a greatest availability offset attribute among the plurality of origin servers. In a scenario in which the one or more latency values comprise availability start time attributes, the lowest-latency origin server may be with the origin server exhibiting the earliest availability start time among the plurality of origin servers.

In some examples, one or more of the origin servers may be assigned to a dormant mode. The assignment may be based on the one or more latency values associated with the one or more segments of the content at each origin server. The assignment may be made by any device, such as the user device, a content steering server, an origin server among the plurality of origin servers. A dormant mode origin may receive either no segments of content or segments of content in a reduced representation. Reduced representation of segments of content may comprise one or more single-representation low-resolution video segments of content.

In some examples, the determined lowest-latency origin server may be a default selection. The default selection may be modified based on edge latencies. The edge latencies may be determined by a content steering server and transmitted to the user device.

At step 306, the user device may send to the determined lowest-latency origin server a request for the one or more segments of the content. The request for the one or more content segments may be in the form of an HTTP request. The HTTP request may comprise a URL associated with each of the one or more requested content segments. The requested content segments may be associated with a particular representation of the content (e.g., a particular bitrate, resolution, and/or combinations thereof).

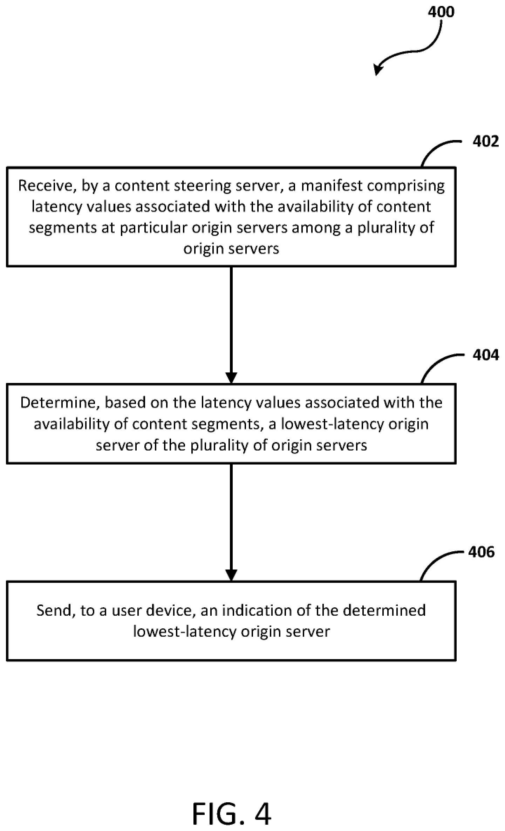

FIG. 4 shows an example method. The example method 400 may be performed by one or more content steering servers, such as the one or more content steering servers 112 described in FIG. 1. At step 402, a content steering server may receive a manifest associated with content. The manifest may comprise, for each of a plurality of origin servers, a latency value associated with one or more segments of the content at the origin server. The latency value may be indicated with one or more availability offset attributes. In some instances, an availability time offset for a particular origin server may be associated with a relative time difference between a latest availability time across the plurality of origin servers and an availability time at the particular origin server. The latest availability time across all communicating origins may correspond with a time value associated with the latest arrival of a particular segment among the plurality of origin servers. The availability time at the particular origin server may correspond with a time associated with the arrival of a particular segment at the particular origin server.

Alternatively, or in addition, at step 402, the content steering server may receive a plurality of manifests, for example one from each of a plurality of origin servers. The content steering server may receive a plurality of manifests from each of a plurality of origin servers when origin servers do not communicate with one another. Each manifest of the plurality of manifests may comprise a latency value associated with one or more segments of the content at the origin server that generated the manifest. In some instances, the latency value may be associated with an availability start time attribute (e.g., MPD@availabilityStartTime attribute) for a particular origin server. The availability start time attribute may be associated with an arrival time of the content segment at the particular origin server.

At step 404, the content steering server may determine a lowest-latency origin server of the plurality of origin servers. The determination may be based on the latency values associated with the one or more segments of the content at each origin server. For example, if the latency values are availability offset attributes, the lowest-latency origin server may be associated with the greatest availability offset attribute among the plurality of origin servers. In another example, if the latency values are availability start time attributes, the lowest-latency origin server may be associated with the earliest availability start time among the plurality of origin servers.

In some examples, the example method 400 may further comprise determining, by the content steering server, an edge latency between one or both of an origin server and a content delivery network server, or a content delivery network server and the user device. One or more devices, such as the content steering server, may adjust, based on the determined edge latency, the determined lowest-latency origin server. Additionally and/or alternatively, the adjustment may be based on a the need for load balancing between one or more of the plurality of origin servers, one or more content delivery network servers, and/or one or more encoders (e.g., where all (or substantially all) user devices select one origin server as a default selection, and performance at that origin server is degraded such that it is no longer providing the earliest availability of content segments). The content steering server may be configured to determine the lowest latency origin server using a shortest path algorithm.

At step 406, the content steering server may send to one or more user devices an indication of the determined lowest-latency origin server. For example, the indication may comprise a URL address corresponding to the earlier origin server. The indication may comprise a modified manifest, wherein the modified manifest only comprises information related to the determined lowest-latency origin server (e.g., the address of the determined lowest-latency origin server, content bitrates available at the determined lowest-latency origin server, and other information commonly found in manifest files).

In some instances, steps 402-406 may be in response to the user device making a request to the content steering server for content segments. In other instances, steps 402-406 may be unprompted by a user device, and performed according to a set schedule (e.g., once every 100 seconds) or in response to a system event (e.g., one or more system components going offline, or being moved to standby or disaster mode).

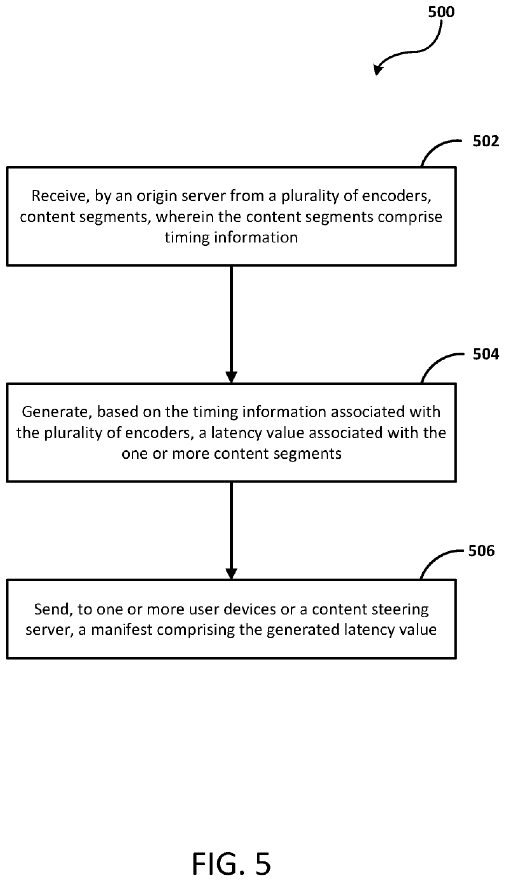

FIG. 5 shows an example method. The example method 500 may be performed by one or more origin servers, such as the one or more origin servers 108a-b described in FIG. 1. At step 502, the origin server may receive content from a plurality of encoders that may comprise one or more content segments. The one or more content segments may comprise timing information. The timing information may comprise a timestamp, and the timestamp may be associated with a first frame of the one or more content segments. For example, the timing information may be associated with a time at which a first frame of one of the content segments was generated. The timing information for a given content segment may be inserted as a 'prft' ISO-BMFF box into the content segment itself. Alternatively, or in addition, the timing information may be incorporated into a manifest (e.g., as an MPD@availabilityStartTime attribute set to an absolute date (e.g., 1/1/1970 0:00:00.000 GMT)). In some instances, the timing information may be associated with segment boundaries of a transport stream (e.g., in MPEG-2 TS, including the timestamp of the first frame of the segment in the EBP descriptor or other adaption field).

In some examples, the origin server may determine, based on the timing information, the encoder providing the earliest availability of content segments. The origin server may select, based on the determined encoder providing the earliest availability of content segments, an encoder as a primary source and one or more distribution encoders as secondary sources. The encoders selected as secondary sources may be assigned to a standby or disaster mode. The encoders assigned to the standby or disaster mode may be configured to encode higher-resolution video and multichannel audio representations. The configuration may be activated by the origin server.

At step 504, the origin server may generate a latency value based on the timing information. The generated latency value may be associated with the one or more content segments, such as a relative availability of one or more of the content segments at the particular origin server among a plurality of other origin servers. For example, the origin serve may determine which encoder from the plurality of encoders is providing the earliest availability of content segments based on the timing information (e.g., by comparing the timestamps associated with content segments received from the plurality of encoders). The origin server may compare this determined earliest availability of content segments with the earliest availability of the plurality of origin servers. The difference between these earliest availabilities may represent the relative latency of the origin server, and may reflect the availability of one or more content segments at that particular origin server relative to the availability of that same (or similar) one or more content segments among the plurality of origin servers.

The latency value of a particular origin server may be indicated with an availability time offset attribute associated with the relative latency of the particular origin server. For example, the relative latency of an individual origin server may be associated with the time difference between (1) an availability start time at an individual origin server and (2) either of (a) a latest availability start time among all the one or more origin servers or (b) an earliest availability start time among all the one or more origin servers.

At step 506, the origin server may send a manifest to one or more user devices or a content steering server. The manifest may comprise the latency value generated by the origin server. Moreover, where the origin server communicates with the plurality of origin servers, the manifest may comprise the latency values of one or more of the origin servers comprising the plurality of origin servers. The latency values generated by the plurality of origins may be incorporated into the manifest as an availability time offset attribute (e.g., an MPD@availabilityTimeOffset attribute).

In some examples, sending or otherwise making available the manifest may be in response to a request for content from the one or more user devices or the content steering server. The request for content may be made directly to an origin server (e.g., user device 132 directly communicating with origin server 108a) or indirectly to an origin server (e.g., user device 132 indirectly communicating with origin server 108a through content steering server 112).

In some examples, upon receipt of the manifest, the one or more user devices or content steering server may use the latency values to determine the lowest-latency origin server among the plurality of origin servers. Determining the lowest-latency origin based on only the latency values may be considered a default determination, and the default determination may be adjusted based on other factors. The one or more system components may select the determined lowest-latency origin as the origin from which the one or more system components request content segments from.

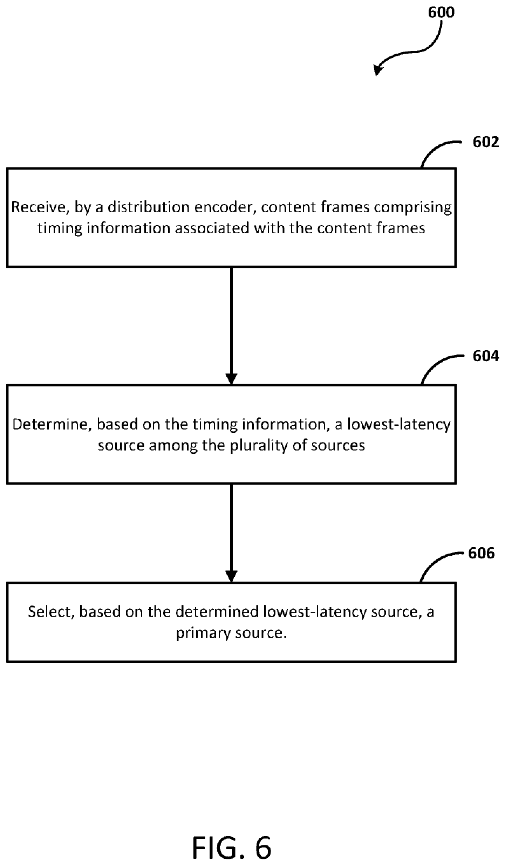

FIG. 6 shows an example method. The example method 600 may be performed by one or more distribution encoders, such as the one or more distribution encoders 106 described in FIG. 1. At step 602, a distribution encoder may receive content in the form of content frames from a plurality of sources. Moreover, the content from the plurality of sources may comprise timing information, such as timestamps associated with the content frames. The plurality of sources may be contribution encoders, and the content frames from the plurality of sources may reach the distribution encoder through multiple paths (e.g., communication channels), multiple formats, and combinations thereof.

At step 604, the distribution encoder may determine a lowest-latency source among the plurality of sources based on the timing information. For example, the timing information may comprise timestamps associated with the time at which a particular frame was generated. The distribution encoder may use the timestamps from multiple sources to identify content-identical samples (e.g., a same or similar time stamp of a particular frame of content created by a contribution encoder). The distribution encoder may compare the time at which content-identical samples were received, and subsequently determine the lowest-latency source.

In other examples, determining content-identical content samples may be based upon methods other than comparing time stamps. For example, determining content identical samples may be performed with an out-of-band configuration (e.g., determining content-identical samples with the use of devices that may not be the distribution encoders themselves, such as an external server); associating content-identical content samples may involve the use of algorithms based on frame properties (e.g., cryptographic hash, color and edge histograms, and the like); or a similar method for determining identical or near-identical samples of content.

At step 606, the distribution encoder may select a primary source. The primary source may be based on the determined lowest-latency source of the plurality of sources. In some instances, the distribution encoder may generate content segments based on the content frames received from the primary encoder. The distribution encoder may make available the content segments generated based on the content frames received from the primary encoder.

Additionally, in some instances, the example method 600 may further comprise the distribution encoder selecting one or more secondary sources based on the determined lowest-latency source. For example, a secondary sources may be a source not corresponding to the determined lowest-latency source. In some instances, the one or more secondary sources may be used as failover for redundancy purposes.

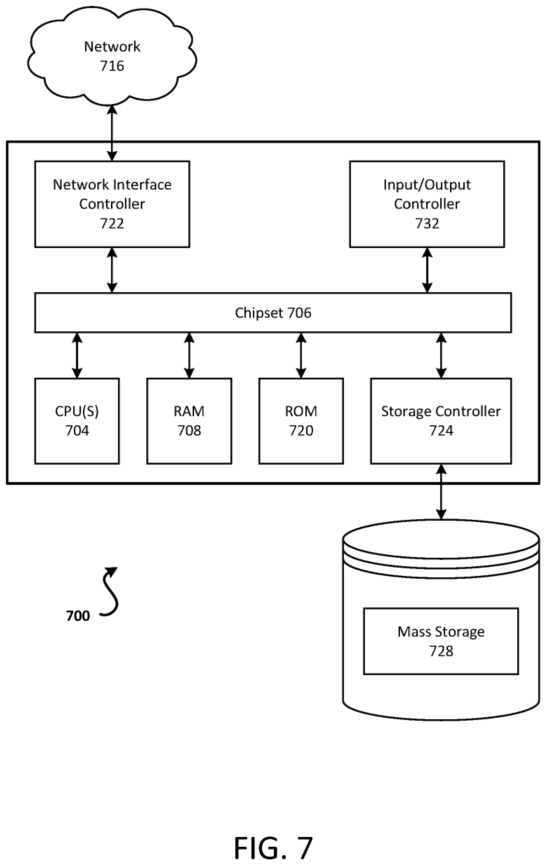

FIG. 7 depicts a computing device that may be used in various aspects, such as the content source 102, contribution encoders 104, distribution encoders 106, origin servers 108, content delivery network (CDN) servers 110, content steering server 112, and user device 132 depicted in FIG. 1. With regard to the example architecture of FIG. 1, any of the servers, devices, or components may each be implemented in an instance of a computing device 700 of FIG. 7.

The computer architecture shown in FIG. 7 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIGS. 3-6.

The computing device 700 may include a baseboard, or "motherboard," which is a printed circuit board to which a multitude of components or devices may be connected by way of a system bus or other electrical communication paths. One or more central processing units (CPUs) 704 may operate in conjunction with a chipset 706. The CPU(s) 704 may be standard programmable processors that perform arithmetic and logical operations necessary for the operation of the computing device 700.

The CPU(s) 704 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 704 may be augmented with or replaced by other processing units, such as GPU(s) 707. The GPU(s) 707 may comprise processing units specialized for but not necessarily limited to highly parallel computations, such as graphics and other visualization-related processing.

A chipset 706 may provide an interface between the CPU(s) 704 and the remainder of the components and devices on the baseboard. The chipset 706 may provide an interface to a random access memory (RAM) 708 used as the main memory in the computing device 700. The chipset 706 may further provide an interface to a computer-readable storage medium, such as a read-only memory (ROM) 720 or non-volatile RAM (NVRAM) (not shown), for storing basic routines that may help to start up the computing device 700 and to transfer information between the various components and devices. ROM 720 or NVRAM may also store other software components necessary for the operation of the computing device 700 in accordance with the aspects described herein.

The computing device 700 may operate in a networked environment using logical connections to remote computing nodes and computer systems through local area network (LAN) 716. The chipset 706 may include functionality for providing network connectivity through a network interface controller (NIC) 722, such as a gigabit Ethernet adapter. A NIC 722 may be capable of connecting the computing device 700 to other computing nodes over a network 716. It should be appreciated that multiple NICs 722 may be present in the computing device 700, connecting the computing device to other types of networks and remote computer systems.

The computing device 700 may be connected to a mass storage device 728 that provides non-volatile storage for the computer. The mass storage device 728 may store system programs, application programs, other program modules, and data, which have been described in greater detail herein. The mass storage device 728 may be connected to the computing device 700 through a storage controller 724 connected to the chipset 706. The mass storage device 728 may consist of one or more physical storage units. A storage controller 724 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 700 may store data on a mass storage device 728 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 728 is characterized as primary or secondary storage and the like.

For example, the computing device 700 may store information to the mass storage device 728 by issuing instructions through a storage controller 724 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 700 may further read information from the mass storage device 728 by detecting the physical states or characteristics of one or more particular locations within the physical storage units.

In addition to the mass storage device 728 described above, the computing device 700 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 700.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic tape, magnetic disk storage, other magnetic storage devices, or any other medium that may be used to store the desired information in a non-transitory fashion.

A mass storage device, such as the mass storage device 728 depicted in FIG. 7, may store an operating system utilized to control the operation of the computing device 700. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 728 may store other system or application programs and data utilized by the computing device 700.

The mass storage device 728 or other computer-readable storage media may also be encoded with computer-executable instructions, which, when loaded into the computing device 700, transforms the computing device from a general-purpose computing system into a special-purpose computer capable of implementing the aspects described herein. These computer-executable instructions transform the computing device 700 by specifying how the CPU(s) 704 transition between states, as described above. The computing device 700 may have access to computer-readable storage media storing computer-executable instructions, which, when executed by the computing device 700, may perform the methods described in relation to FIGS. 3-6.

A computing device, such as the computing device 700 depicted in FIG. 7, may also include an input/output controller 732 for receiving and processing input from a number of input devices, such as a keyboard, a mouse, a touchpad, a touch screen, an electronic stylus, or other type of input device. Similarly, an input/output controller 732 may provide output to a display, such as a computer monitor, a flat-panel display, a digital projector, a printer, a plotter, or other type of output device. It will be appreciated that the computing device 700 may not include all of the components shown in FIG. 7, may include other components that are not explicitly shown in FIG. 7, or may utilize an architecture completely different than that shown in FIG. 7.

As described herein, a computing device may be a physical computing device, such as the computing device 700 of FIG. 7. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described herein with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another, or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, or in addition, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a user device, a manifest associated with content, wherein the manifest comprises, for each of a plurality of origin servers, one or more latency values associated with one or more segments of the content at a particular origin server.

Clause 2. The method of clause 1, further determining, based on the one or more latency values associated with the one or more segments of the content at each origin server, a lowest-latency origin server of the plurality of origin servers.

Clause 3. The method of clause 1 or clause 2, further sending, by the user device and to the determined lowest-latency origin server, a request for the one or more segments of the content.

Clause 4. The method of any one of clauses 1 to 3, further wherein, for each of the plurality of origin servers, the one or more latency values comprise an availability time offset attribute associated with a relative latency among the plurality of origin servers.

Clause 5. The method of any one of clauses 1 to 4, further wherein the relative latency is associated with the difference between an availability start time at an individual origin server and either of: a latest availability start time among each of the plurality of origin servers, or an earliest availability start time among each of the plurality of origin servers.

Clause 6. The method of any one of clauses 1 to 5, further wherein the manifest is a media presentation description file associated with an adaptive bitrate streaming protocol.

Clause 7. The method of any one of clauses 1 to 6, further comprising: assigning, based on the one or more latency values associated with the one or more segments of the content at each origin server, one or more origin servers to a dormant mode.

Clause 8. The method of any one of clauses 1 to 7, further wherein dormant mode origins receive either: no segments of content, or segments of content in a reduced representation.

Clause 9. The method of any one of clauses 1 to 8, further wherein the reduced representation comprises one or more single-representation low-resolution video segments of content.

Clause 10. The method of any one of clauses 1 to 9, further wherein the determined lowest-latency origin server is a default selection, and the default selection is modified based on one or more edge latencies.

Clause 11. The method of any one of clauses 1 to 10, further wherein the one or more edge latencies are determined by a content steering server and transmitted to the user device.

Clause 12. The method of any one of clauses 1 to 11, further wherein the user device comprises one or more of a set-top box, a television, a display device, a computer, a smartphone, a laptop, a tablet, a multimedia playback device, or a portable electronic device.

Clause 13. A method comprising: receiving, by a content server, a manifest associated with content, wherein the manifest comprises, for each of a plurality of origin servers, a latency value associated with one or more segments of the content at the origin server.

Clause 14. The method of clause 13, further determining, based on the latency values associated with the one or more segments of the content at each origin server, a lowest-latency origin server, of the plurality of origin servers.

Clause 15. The method of clause 13 or clause 14, further sending, to a user device, an indication of the determined lowest-latency origin server.

Clause 16. The method of any one of clauses 13 to 15, further comprising: determining, by the content steering server, an edge latency between one or both of: an origin server and a content delivery network server, or a content delivery network server and the user device; and adjusting, based on the determined edge latency, the determined lowest-latency origin server.

Clause 17. The method of any one of clauses 13 to 16, further wherein the content steering server is configured to determine the lowest latency origin server using a shortest path algorithm.

Clause 18. The method of any one of clauses 13 to 17, further wherein adjusting the determined lowest-latency origin server is also based on the need for load balancing between one or more of the plurality of origin servers, one or more content delivery network servers, or one or more encoders.

Clause 19. A method comprising: receiving, by an origin server from a plurality of encoders, one or more content segments, wherein the one or more content segments comprise timing information associated with the plurality of encoders.

Clause 20. The method of clause 19, further generating, based on the timing information associated with the plurality of encoders, a latency value associated with the one or more content segments.

Clause 21. The method of clause 19 or clause 20, further sending, to one or more user devices, a manifest comprising the generated latency value.

Clause 22. The method of any one of clauses 19 to 21, further wherein the one or more user devices or the content steering server use the generated latency value to determine a lowest-latency origin server.

Clause 23. The method of any one of clauses 19 to 22, further wherein the timing information comprises a timestamp, and the timestamp is associated with a first frame of the one or more content segments.

Clause 24. The method of any one of clauses 19 to 23, further wherein the timing information comprising a timestamp is recorded in at least one of a 'prft' ISO-Base Media File Format (BMFF) box, an Encoder Boundary Point (EBP) descriptor, or a SCTE-35 signaling standard.

Clause 25. The method of any one of clauses 19 to 24, further comprising: determining, based on the timing information, an encoder providing the earliest availability of content segments; and selecting, based on the determined encoder providing the earliest availability of content segments, an encoder as a primary source and one or more encoders as secondary sources.

Clause 26. The method of any one of clauses 19 to 25, further wherein the one or more encoders selected as secondary sources are assign to a standby or disaster mode, and wherein the one or more encoders assigned to the standby or disaster mode are configured to encode higher-resolution video and multichannel audio representations, and wherein such configuration may be activated by the origin server.

While the methods and systems have been described in connection with preferred embodiments and specific examples, it is not intended that the scope be limited to the particular embodiments set forth, as the embodiments herein are intended in all respects to be illustrative rather than restrictive.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a true scope and spirit being indicated by the following claims.

## Claims

1. A method comprising:
receiving, by a user device, a manifest associated with content, wherein the manifest comprises, for each of a plurality of origin servers, one or more latency values associated with one or more segments of the content at a particular origin server;
determining, based on the one or more latency values associated with the one or more segments of the content at each origin server, a lowest-latency origin server of the plurality of origin servers; and
sending, by the user device and to the determined lowest-latency origin server, a request for the one or more segments of the content.

2. The method of claim 1, wherein, for each of the plurality of origin servers, the one or more latency values comprise an availability time offset attribute associated with a relative latency among the plurality of origin servers.

3. The method of claim 2, wherein the relative latency is associated with the difference between an availability start time at an individual origin server and either of:
a latest availability start time among each of the plurality of origin servers, or
an earliest availability start time among each of the plurality of origin servers.

4. The method of any one of claims 1-3, wherein the manifest is a media presentation description file associated with an adaptive bitrate streaming protocol.

5. The method of any one of claims 1-4, further comprising:
assigning, based on the one or more latency values associated with the one or more segments of the content at each origin server, one or more origin servers to a dormant mode.

6. The method of claim 5, wherein dormant mode origins receive either:
no segments of content, or
segments of content in a reduced representation.

7. The method of claim 5 or 6, wherein the reduced representation comprises one or more single-representation low-resolution video segments of content.

8. The method of any one of claims 1-7, wherein the determined lowest-latency origin server is a default selection, and the default selection is modified based on one or more edge latencies.

9. The method of claim 8, wherein the one or more edge latencies are determined by a content steering server and transmitted to the user device.

10. The method of any one of claims 1-9, wherein the determining, by the user device, the lowest-latency origin server is based on an indication received from a content server, the indication being generated by the content server by:
receiving, by the content server, a manifest associated with content, wherein the manifest comprises, for each of the plurality of origin servers, a latency value associated with one or more segments of the content at the origin server;
determining, based on the latency values associated with the one or more segments of the content at each origin server, a lowest-latency origin server, of the plurality of origin servers; and
sending, to the user device, an indication of the determined lowest-latency origin server.

11. The method of claim 10, further comprising:
determining, by the content steering server, an edge latency between one or both of:
an origin server and a content delivery network server, or
a content delivery network server and the user device; and
adjusting, based on the determined edge latency, the determined lowest-latency origin server.

12. The method of claim 11, wherein the content steering server is configured to determine the lowest-latency origin server using a shortest path algorithm, and wherein the adjusting of the determined lowest-latency origin server is further based on load balancing between one or more of the plurality of origin servers, one or more content delivery network servers, or one or more encoders.

13. A device comprising:
one or more processors; and
memory storing instructions that, when executed by the one or more processors, cause the device to perform the method of any one of claims 1-12.

14. A computer-readable medium storing instructions that, when executed, cause the method of any one of claims 1-12 to be performed.

15. A system comprising:
a plurality of origin servers; and
a user device configured to perform the method of any one of claims 1-12.
